# EUROPEAN PATENT APPLICATION

(11) **EP 4 667 642 A1**
(43) Date of publication of application: **24.12.2025**
(21) Application number: 23922539.4
(22) Date of filing: 28.12.2023
(51) Int. Cl.: D06F 39/08, D06F 39/10

(54) **DOUBLE-WATER PATH POWER APPARATUS AND WASHING DEVICE**

(30) Priority: 15.02.2023 CN 202310116707
(71) Applicant: CHONGQING HAIER WASHING MACHINE CO., LTD., Chongqing, 400026 (CN); HAIER SMART HOME CO., LTD., Qingdao, Shandong 266101 (CN)
(72) Inventor: PAN, Wenwu, Qingdao, Shandong 266101 (CN); LU, Jinbo, Qingdao, Shandong 266101 (CN); CHENG, Baozhen, Qingdao, Shandong 266101 (CN); LI, Liping, Qingdao, Shandong 266101 (CN); SUN, Guangbin, Qingdao, Shandong 266101 (CN)
(74) Representative: Patentwerk B.V.
(86) International application number: PCT/CN2023/142623
(87) International publication number: WO 2024/169424

(57) **Abstract**

A power device for dual water paths and a washing apparatus are provided. The power device comprises a water path connecting body (1), a filter (4), and two pumping units (5). The water path connecting body (1) is provided with a water inflow cavity (2) and two water outflow cavities (3); the two water outflow cavities (3) are connected in parallel with each other and are connected in series to the water inflow cavity (2); the filter (4) is provided on the water path connecting body (1) and located at a water outlet end of the water inlet cavity (2); and the two pumping units (5) are respectively provided on the two water outlet cavities (3). The optimized design is carried out on the cavities in the water path connecting body (1), and the two pumping units (5) pump water by means of respective water outflow cavities, so that a more reasonable position adjustment can be achieved; water flow filtering is performed by means of a single filter (4), so that the mounting space is reduced, thereby solving the problem of mounting in a limited space in the washing device.

## Description

### CROSS-REFERENCE TO RELATED APPLICATIONS

The present application claims priority to Chinese patent application No. 202310116707.8 filed on February 15, 2023, the entire disclosure of which is incorporated herein by reference.

### BACKGROUND OF THE INVENTION

The present invention relates to the technical field of washing apparatus and specifically provides a power device for dual water paths and a washing apparatus.

### BACKGROUND OF THE INVENTION

As a necessary household appliance, a washing machine has an interior water path system that includes not only an upper water inflow system but also a lower drainage water path system and so on. With increasing demands for environmental protection and economy, a market has placed higher requirements on the functionality, eco-friendliness, and energy-saving of washing machines. As a compact household appliance, washing machines face an urgent challenge of accommodating a power device for multiple water paths within a limited space. Other types of washing apparatus encounter similar problems.

In the prior art, taking washing machines as an example, there are generally two solutions to address water supply and drainage. One solution involves installing two independent power pumps which may be mounted on either side of the washing machine or arranged side by side. This approach incurs higher costs and tends to increase the failure rate. Additionally, two independent power pumps occupy a large mounting space, which reduces the space of the washing tub, resulting in a decrease in washing capacity for a washing machine of the same size. The other solution is to use multiple pump heads in a single cavity. However, due to the limitation of shared cavities, it is difficult to optimize the direction of the pump heads, which still occupy a large space. Moreover, in practical operation, water paths are prone to leakage, and to ensure the independence of the water paths, the pump heads can only be adjusted to operate at a lower power.

Accordingly, there is a need in the field for a power device for water supply and drainage that can address the aforementioned issues.

### SUMMARY OF THE INVENTION

The present invention aims to solve the above technical problem in the prior art, i.e., the water path power device occupies significant space in a limited mounting space in a washing apparatus. To this end, the invention provides a power device for dual water paths, which comprises:
a water path connecting body provided with a water inflow cavity and two water outflow cavities, wherein the two water outflow cavities are connected in parallel with each other and in series with the water inflow cavity;
a filter arranged on the water path connecting body and located at a water outlet end of the water inflow cavity;
two pumping units arranged on the two water outflow cavities, respectively.

In an embodiment with the power device mentioned above, the water path connecting body is further provided with a water outflow through-cavity. The water inflow cavity is connected to the water outflow through-cavity. One of the water outflow cavities is connected to one end of the water outflow through-cavity, and the other water outflow cavity is connected to the other end of the water outflow through-cavity, and the two pumping units are located on one side of the water outflow through-cavity.

In an embodiment with the power device mentioned above, the water outlet end of the water inflow cavity is communicated with one end of the water outflow through-cavity, and the filter is arranged at a junction between the water inflow cavity and the water outflow through-cavity.

In an embodiment with the power device mentioned above, a bottom surface of the water outflow through-cavity has a height that gradually reduces in a direction towards the filter.

In an embodiment with the power device mentioned above, the filter is detachably connected to the water path connecting body.

In an embodiment with the power device mentioned above, the filter comprises a filter body and a fixing element. The water path connecting body is provided with a mounting hole, and the filter body is inserted into the mounting hole. The fixing element is connected to the water path connecting body and abuts against the filter body to fix the filter body at the water outlet end of the water inflow cavity.

In an embodiment with the power device mentioned above, the filter further comprises a sealing element, and the sealing element is arranged between the fixing element and the water path connecting body to maintain a sealed connection between the fixing element and the mounting hole.

In an embodiment with the power device mentioned above, the water path connecting body is provided with a fixing end to fixedly connect the water path connecting body to a component to be connected.

In an embodiment with the power device mentioned above, the pumping unit comprises a pump head and pump vanes. The pump head is connected to the water path connecting body, and the pump vanes are arranged at an output end of the pump head within the water outflow cavity.

A washing device comprising a return water path and a drainage water path, and the power device for dual water paths described in the aforementioned embodiments, wherein the return water path and the drainage water path are respectively connected to the two water outflow cavities.

In the case of the above technical solutions, the present invention optimizes the cavities within the water path connecting body by dividing them into a water inflow cavity and two water outflow cavities. Two pumping units are installed on the two water outflow cavities, respectively, and the water outflow cavities are set separately. The problem of two pumping units sharing one water outflow cavity in the prior art, which makes it impossible to optimize the installation position of the pumping units and eventually leads to space occupation, has been solved. By applying two independent water outflow cavities, the installation positions of the two pumping units can be reasonably optimized as needed, and the volume of the dual pumping units can be reduced as much as possible. A filter is installed at the outlet end of the water inflow cavity, so that after washing water passes through the filter first, and will not carry impurities such as lint, no matter which water outflow cavity the water passes through. The two water outflow cavities can be selectively used as a drainage outlet and a return water outlet. The separation of the two outflow cavities can, on the one hand, optimize the installation positions of the pumping units, reduce occupied space, and improve the space utilization rate of the washing apparatus. On the other hand, it can also prevent the problem of water leakage when one of the pumping units is working due to sharing one cavity, thereby improving the water quality used as a return water outflow cavity.

### BRIEF DESCRIPTION OF THE DRAWINGS

Preferred embodiments of the present invention will be described below in connection with the accompanying drawings, in which:
Figure 1 is a schematic diagram of the axonometric structure of the power device showing the installation positions of the filter and two pumping units;
Figure 2 is a schematic diagram of the cross-sectional structure of the power device in the present invention, showing the arrangement of the internal cavities of the water path connecting body;
Figure 3 is a schematic diagram of the filter structure in the present invention.

List of reference signs: 1. Water path connecting body, 2. Water inflow cavity, 3. Water outflow cavity, 4. Filter, 5. Pumping unit, 6. Water outflow through-cavity, 7. Filter body, 8. fixing element, 9. Sealing element, 10. Fixing end, 11. Pump head, 12. Pump vane.

### DETAILED DESCRIPTION OF THE INVENTION

Preferred embodiments of the present invention will be described below with reference to the accompanying drawings and in conjunction with a washing machine. It should be understood by those skilled in the art that these following embodiments are only used to explain the technical principle of the present invention, and are not intended to limit the scope of protection of the present invention. These embodiments can be adjusted by those skilled in the art as needed to adapt to specific application scenes. For example, although the present application is described in connection with a washing machine, this is not limiting. Those skilled in the art may apply the present invention to other washing apparatuses as needed, as long as the washing apparatuses require drainage and water return and need to optimize mounting space.

It should be noted that in the description of the present invention, terms indicating directional or positional relationships, such as "upper", "lower", "left", "right", "inner", and "outer", are based on the directional or positional relationships shown in the accompanying drawings. They are only used for ease of description, and do not indicate or imply that the device or element must have a specific orientation, or must be constructed or operated in a specific orientation; therefore, they should not be considered as limitations to the present invention. In addition, ordinal terms "first", "second", etc., are only used for descriptive purpose, and should not be understood as indicating or implying relative importance.

In addition, it should also be noted that in the description of the present invention, unless otherwise clearly specified and defined, terms "mounting" and "connect" should be understood in a broad sense; for example, the connection may be a fixed connection, or a detachable connection, or an integral connection; it may be a mechanical connection or electrical connections; it may be a direct connection, or an indirect connection implemented through an intermediate medium. For those skilled in the art, the specific meaning of the above terms in the present invention can be interpreted according to specific situations.

Furthermore, in order to more clearly describe the core technical solution of the present invention, descriptions of well-known structures of the washing machine are omitted in the following description. However, such an omission is solely for the convenience of description and does not imply that the washing machine can be devoid of these structures.

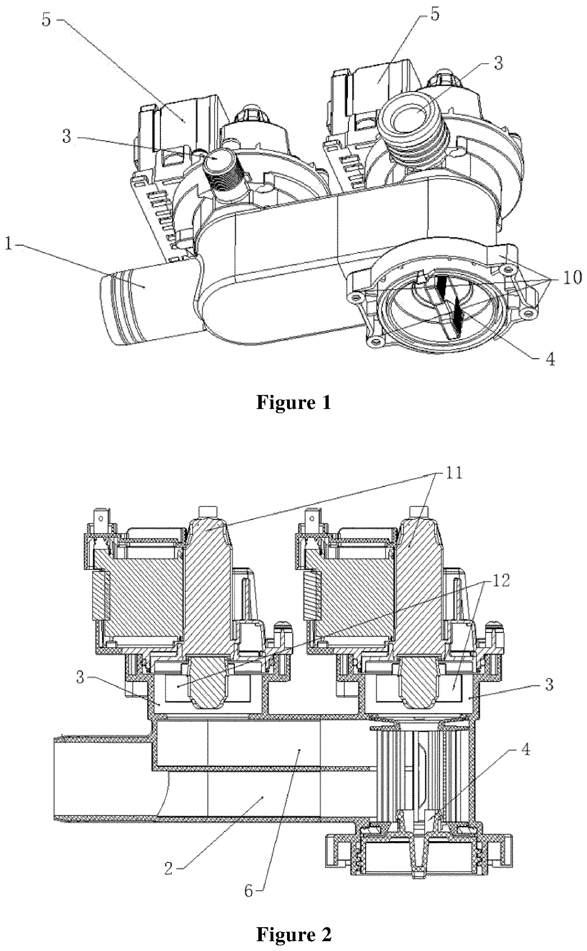

As shown in Figures 1-3, the present invention provides a power device for dual water paths comprising:
a water path connecting body 1, which includes a water inflow cavity 2 and two water outflow cavities 3, wherein the two water outflow cavities 3 are arranged in parallel and connected in series with the water inflow cavity 2;
a filter 4, which is arranged on the water path connecting body 1 and located at a water outlet end of the water inflow cavity 2;
two pumping units 5, wherein the two pumping units 5 are arranged on the two water outflow cavities 3, respectively.

To solve the problem of limited mounting space for the power device for water paths in washing machines in the prior art, this invention optimizes and upgrades the water path connecting body 1, thereby reducing the mounting space required for the power device. The technical concept of this invention lies in redesigning and optimizing the internal cavity space of the water path connecting body 1, allowing for optimal selection of the installation position and direction of the pumping units 5 connected to the water path connecting body 1. This minimizes the overall space occupied by the pumping units 5 and the water path connecting body 1 within the washing machine. The filter 4 on the water path connecting body 1 is installed at the water outlet end of the water inflow cavity 2, enabling a single filter 4 to filter and remove impurities from the water within the water inflow cavity 2. This reduces the size of the water path connecting body 1 while still meeting the needs of water recycling and drainage in the washing machine, achieving both water conservation and cleanliness. It should be noted that the mounting space and position of the pumping units 5 in this invention are based on the installation options available due to the optimization of the internal cavities of the water path connecting body 1. The specific optimization of the installation position can be selected by those skilled in the art according to actual installation requirements. Therefore, any optimization of the mounting space for the pumping units 5 by correspondingly optimizing the internal space of the water path connecting body 1 falls within the scope of protection of this invention.

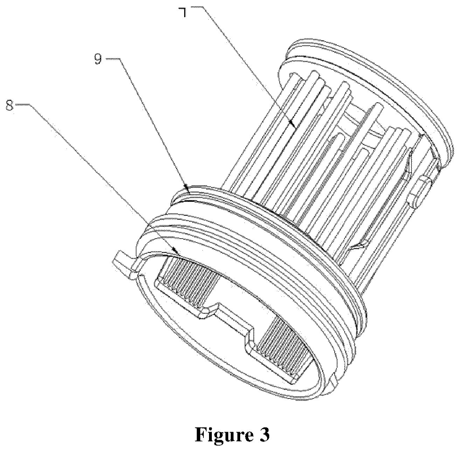

Based on the technical concept mentioned above, an implementation is described below with reference to Figures 1 and 2. Figure 1 shows the whole assembled structure of the pumping units 5, the water path connecting body 1, and the filter 4; Figure 3 shows the internal structure of the water path connecting body 1 after being sectioned. In particular, in Figure 1, two pumping units 5 are mounted in parallel on one side of the water path connecting body 1, and the filter 4 is inserted into the interior of the water path connecting body. Via this connection arrangement, the pumping units 5 are mounted in parallel on one side of the water path connecting body 1 to make full use of the space on one side of the water path connecting body 1, and mounting the filter 4 in the interior of the water path connecting body 1 further reduces the mounting space. Figure 2 shows the internal cavities of the water path connecting body 1, the arrangement of the water inflow cavity 2 and the water outflow cavities 3 can be adjusted according to installation requirements, and multiple communication manners may exist between the water inflow cavity 2 and the water outflow cavities 3. Crucially, each of the two pumping units 5 uses one cavity for pumping water, respectively. The two outflow cavities 3 are arranged at intervals from each other to maintain a certain distance. When one cavity is working, this arrangement can ensure the other cavity to be affected as little as possible, thus avoiding the problem of water path leakage. The filter 4, mounted at the outlet end of the water inflow cavity 2, filters water and improves water quality. Consequently, the water quality of both water outflow cavities 3 is improved. If one of the water outflow cavities 3 is used for drainage, the risk of wire scraps clogging is reduced; if it is used for water return to the washing area of the washing apparatus, the reused water quality is improved, aiding water conservation.

In this embodiment, referring to Figure 2, the water inflow cavity 2 communicates with the two water outflow cavities 3 via a water outflow through-cavity 6. The water outflow through-cavity 6 and the water inlet cavity 2 are separated by a partition within the water path connecting body 1, forming two parallel cavities. The two water outflow cavities 3 are spaced along one side of the outflow through-cavity 6, and the two pumping units 5 are located at one side of the outflow through-cavity 6. The parallel arrangement of the two pumping units 5 maximizes space utilization. Adding the outflow through-cavity 6 and the distance maintained between the two outlet cavities 3 minimizes interference between different water paths and thus prevents the water path leakage. The two pumping units 5 have portions that relatively occupy more space, and the portions are mounted to face each other to utilize the space between the two pumping units 5. It should be noted that it only needs that the two outflow cavities 3 are arranged at intervals and are communicated with the water outflow through-cavity 6, that the position of the water outflow cavities 3 relative to the outflow through-cavity 6 can be set according to installation requirements, and that while the water outflow cavities 3 are preferably placed near two ends of the water outflow through-cavity 6, it is not necessary to locate the outflow cavities 3 at the two ends of the water outflow through-cavity 6 as long as the spatial separation of the two outflow cavities 3 is maintained.

Based on the above embodiment, as shown in Figure 2, the water inflow cavity 2 is preferably connected to one end of the water outflow through-cavity 6, and the filter 4 is installed at a location where the water inflow cavity 2 is communicated with the water outflow through-cavity 6. The two water outflow cavities 3 are spaced apart and arranged on one side of the water outflow through-cavity 6. This configuration provides the water outflow cavity 3 at the side away from the filter 4 with a longer sedimentation space. Consequently, the water quality within the water outflow cavity away from the filter 4 will be relatively higher, and when the water outflow cavity 3 on the side close to the filter 4 is used for drainage, the dirt-laden water will be discharged as thoroughly as possible.

Based on the above embodiments, sequentially referring to Figure 2, the water outflow through-cavity 6 communicates with the two water outflow cavities 3 in sequence along a direction of water flow. Preferably, the water outflow cavity 3 on the side away from the filter 4 is used as a water outlet for returning water, while the water outlet cavity 3 on the side closer to the filter 4 is used as a water outlet for drainage. Taking a washing machine as an example, during a washing or rinsing process, the water used for spraying can be pumped from the water outflow cavity 3 on the side away from the filter 4 for rinsing, achieving water conservation. To further improve water quality, the bottom of the water outflow through-cavity 6 is preferably inclined, i.e., the height of the bottom surface of the water outflow through-cavity 6 gradually reduces in a direction towards the filter 4. The side of the water outflow cavity 3 for returning water into the washing machine is higher than the side of the water outflow cavity 3 that is used for drainage. When water flows internally, impurities within the water settle toward the lower side of the water outflow through-cavity 6 as much as possible under the action of the inclined surface. On the one hand, this can improve the quality of water on the side of the water outflow cavity 3 for returning the water to the washing machine. On the other hand, the impurities being closer to the side of the water outflow cavity 3 for drainage can be more conducive to completely removing the impurities. When the final drainage is carried out, it also helps to drain the water in the water path completely and enhances overall discharge performance.

Based on the above embodiments, the filter 4 and the water path connecting body 1 are detachably connected to each other, which facilitates regular replacement by a user. The filter 4 needs to be fixed to the water path connecting body. Specifically, referring to Figure 3, the filter 4 is a combination of a fixing element 8 and a filter body 7. An installation hole is provided on the water path connecting body 1 to accommodate the filter body 7. The fixing element 8 is mounted on the water path connecting body 1 to abut against the water path connecting body 1, thereby securing the filter body within the water path connecting body 1. The filter body is located at the outlet end of the water inflow cavity 2, capable of filtering and removing impurities from the water coming from the water inflow cavity 2. The fixing element 8 and the water path connecting body 1 are detachably connected. Specifically, both the filter body and the fixing element 8 can be made of plastic for ensuring a long service life. The fixing element 8 is in a screw cap form with an intermediate plate provided in the middle of the screw cap to improve operability. The screw cap and the water path connecting body 1 are detachably connected through threaded connection, and the screw cap and the filter body are positioned through an inlay connection, facilitating rapid disassembling and assembling.

Based on the above embodiments, referring to Figure 3, a sealing arrangement is required between the filter 4 and the water path connecting body 1. In this embodiment, a rubber ring is used as the sealing element 9 to ensure a sealed fit, which is pressed against the inner wall of the mounting hole by the fixing element 8. Depending on the installation dimensions and requirements, other structural forms that achieve sealing effects can be selected as the sealing element 9.

Based on the above embodiment, referring to Figure 2, the installation position and arrangement of the pumping units 5 significantly address space constraints. In this embodiment, the pumping apparatus 5 comprises a pump head 11 and pump vanes 12. The pump head 11 is bolted onto the water path connecting body 1, and the pump vanes 12 are mounted at a rotating output end of the pump head 11, located within two water outflow cavities 3. Each pump unit drives the water flow in its respective cavity to prevent the water path leakage.

Based on the aforementioned embodiments, the water path connecting body 1 can be formed as a split structure, such as in the left- and right- parts or in the upper- and lower-parts, during manufacturing and joined through a fusion process. In addition, the water path connecting body 1 is equipped with a fixing end 10. In this embodiment, the fixing end 10 is an end of flange for connecting via bolts to facilitate the installation of the water path connecting body 1 inside the washing machine.

In this embodiment, a washing apparatus is also provided, with a washing machine serving as an example for illustration. However, it should be noted that the washing machine is used as an example to describe the structure and effect of the present invention and does not limit the scope of protection of the present invention. The washing machine is equipped with a return water path and a drainage water path, which are connected to the power device for dual water paths in the above scheme. The two water paths are respectively connected to two water outflow cavities 3. In the above embodiment, the return water path is preferably connected to a return water cavity with higher water quality. The power device for dual water paths in the present invention minimizes the mounting space, allowing more space for the washing machine, and can be adapted to all existing washing machines without requiring changes to the existing drainage scheme. The integrated filter 4 is also convenient for users to clean, with fewer valve pipelines, simple and reliable structure, and low risk of damage.

So far, the technical solution of the present invention has been described in conjunction with the preferred embodiments shown in the accompanying drawings. However, it is easy for those skilled in the art to understand that the scope of protection of the present invention is obviously not limited to these specific embodiments. Without deviating from the principles of the present invention, those skilled in the art can make equivalent modifications or substitutions to the relevant technical features, and the technical solutions after these modifications or substitutions will all fall within the scope of protection of the present invention.

## Claims

1. A power device for dual water paths, comprising:
a water path connecting body provided with a water inflow cavity and two water outflow cavities, wherein the two water outflow cavities are connected in parallel with each other and in series with the water inflow cavity;
a filter arranged on the water path connecting body and located at a water outlet end of the water inflow cavity;
two pumping units respectively arranged on the two water outflow cavities.

2. The power device for dual water paths according to claim 1, wherein the water path connecting body is further provided with a water outflow through-cavity, the water inflow cavity is connected to the water outflow through-cavity, one of the water outflow cavities is connected to one end of the water outflow through-cavity, and the other water outflow cavity is connected to the other end of the water outflow through-cavity, and the two pumping units are located on one side of the water outflow through-cavity.

3. The power device for dual water paths according to claim 2, wherein the water outlet end of the water inflow cavity is connected to one end of the water outflow through-cavity, and the filter is arranged at a junction where the water inflow cavity is connected to the water outflow through-cavity.

4. The power device for dual water paths according to claim 3, wherein a bottom surface of the water outflow through-cavity has a height that reduces gradually in a direction towards the filter.

5. The power device for dual water paths according to claim 1 or 4, wherein the filter is detachably connected to the water path connecting body.

6. The power device for dual water paths according to claim 5, wherein the filter comprises a filter body and a fixing element, the water path connecting body is provided with an mounting hole, the filter body is inserted into the mounting hole, and the fixing element is connected to the water path connecting body and abuts against the filter body to fix the filter body at the water outlet end of the water inflow cavity.

7. The power device for dual water paths according to claim 6, wherein the filter further comprises a sealing element, and the sealing element is arranged between the fixing element and the water path connecting body to maintain a sealed connection between the fixing element and the mounting hole.

8. The power device for dual water paths according to any one of claims 1 to 7, wherein the water path connecting body is provided with a fixing end for fixedly connecting the water path connecting body to a component to be connected.

9. The power device for dual water paths according to any one of claims 1 to 8, wherein the pumping unit comprises a pump head and pump vanes, the pump head is connected to the water path connecting body, and the pump vanes are arranged at an output end of the pump head and located within the water outflow cavity.

10. A washing apparatus comprising a return water path and a drainage water path, and the power device for dual water paths according to any one of claims 1 to 9, wherein the return water path and the drainage water path are respectively connected to the two water outflow cavities.
